# EUROPEAN PATENT APPLICATION

(11) **EP 2 793 338 A2**
(43) Date of publication of application: **22.10.2014**
(21) Application number: 14164682.8
(22) Date of filing: 15.04.2014
(51) Int. Cl.: H02G 3/12

(54) **Fitting for mounting electrical elements or the like with a rectangular prismatic body in horizontal and vertical supports**

(30) Priority: 19.04.2013 ES 201330572
(71) Applicant: Schneider Electric España, S.A., 08019 Barcelona (ES)
(72) Inventor: Suescun Orrillo, Cesar, 31180 Zizur Mayor (NAVARRA) (ES); Gonzalez Iribas, Aitor, 31610 Villava (NAVARRA) (ES)
(74) Representative: Cabinet Plasseraud

(57) **Abstract**

The present invention relates to a fitting for mounting electrical elements or the like with a rectangular prismatic body in horizontal and vertical supports which comprises a frame (5) with an outer transverse width corresponding with the width of the front groove (6) of the supports (2), with engaging formations (8) in the outer part of its transverse width, and having an opening (7) in which the rectangular prismatic body of the electrical elements or the like (1) is fitted, the electrical elements or the like (1) being able to be secured in the frame (5) by means of engaging tabs (9) that the rectangular prismatic body has on its wider sides, the normal mounting position of the electrical elements or the like (1) with a rectangular prismatic body being maintained when mounted on installation supports (2) located in a horizontal position or in a vertical position.

## Description

### Field of the Art

The present invention relates to mounting electrical elements or the like with a rectangular prismatic body in cable guiding supports of corresponding installations, proposing a fitting that allows reversibility of mounting said electrical elements or the like with a rectangular prismatic body in horizontal or vertical supports, such as ducts or other similar installation supports, maintaining the normal position of those electrical elements or the like with a rectangular prismatic body in their mounted placement.

### State of the Art

Mounting electrical elements and the like, such as outlet sockets, fuse carriers, telephone jacks, network jacks, etc., in supports which house the wiring for the corresponding installations, such as ducts, for example, which can be arranged horizontally or vertically according to the sites of application and the path to be followed by the wiring of the installations, is known.

Many functional elements of that type have a normal placement position in the installation, such that the placement thereof in a position turned 90° is, at the very least, unusual for both installation technicians and users.

In that sense, there are functional elements with a square prismatic body provided on four sides with retaining tabs for mounting, such that said elements can be effortlessly mounted in horizontal or vertical installation supports to maintain the normal position of the elements, since the retaining engagement when mounted in the installation support can be established by means of the tabs on either side of the elements, depending on whether the support is arranged horizontally or vertically.

However, there are functional elements with a rectangular prismatic body which only have retaining tabs for mounting on the wider sides of the body in order to establish retaining engagement with said tabs when mounted in installation supports, so these elements can only be placed in their normal position on horizontal supports or on vertical supports since they have to be placed in a position turned 90° with respect to the normal position for mounting in supports of another type.

Solutions according to Patent US 2012009820, for example, are known, in which a frame-like fitting is used for mounting the installation of functional elements or connectors, electrical elements, data transmission elements, etc., in ducts or similar installation supports, with respect to which such elements to be installed cannot be directly mounted, the use of the frame-like fitting for mounting the elements to be installed being necessary at all times.

### Object of the Invention

According to the invention, a fitting which allows reversibility of mounting electrical elements or the like with a rectangular prismatic body in horizontal or vertical installation supports, such as ducts or other similar installation supports, maintaining in each case the normal position of said electrical elements or the like with a rectangular prismatic body when mounting the installation, is envisaged.

The fitting object of the invention comprises a frame the outer transverse width of which corresponds with that of the groove of installation supports for mounting electrical elements or the like, whereas said frame internally determines an opening having a shape corresponding with the contour of the rectangular prismatic body of the electrical elements or the like, having engaging formations in the outer part of the sides corresponding with the larger sides of the inner opening, for the mounting of application of the frame.

This fitting allows solving the problem of mounting electrical elements or the like with a rectangular prismatic body when they are to be installed in horizontally or vertically arranged installation supports, such as ducts or the like.

In fact, the electrical elements or the like with a rectangular prismatic body can be directly mounted in said installation supports by means of retaining with the engaging tabs that those elements have on the wider end faces of their rectangular prismatic body, that mounting being able to be performed in the normal placement position of said electrical elements or the like with a rectangular prismatic body, when the installation support is horizontal, for example; but if the installation support is vertical, said electrical devices or the like with a rectangular prismatic body cannot be directly mounted therein in the normal position since in that position retention of the mounting on the support by means of the engaging tabs of the rectangular prismatic body of said electrical elements or the like cannot be established.

However, by incorporating the fitting object of the invention in the mentioned electrical elements or the like with a rectangular prismatic body, engaging retention on the installation support can be established by means of said fitting through the narrower sides of the rectangular prismatic body of said electrical elements or the like, the mounting thereof in the normal position in vertical installation supports thus being able to be performed.

The electrical elements or the like with a rectangular prismatic body can be installed in a simple and practical manner both in horizontal supports and in vertical supports, always maintaining the normal position of those electrical elements or the like with a rectangular prismatic body, for which purpose in installation supports located in a horizontal position, for example, said electrical elements or the like with a rectangular prismatic body are installed such that they are directly secured on the installation support by means of the engaging tabs that the rectangular prismatic body of the elements themselves has on its wider sides; whereas for installation in installation supports located in a position perpendicular to the preceding position, for example, in a vertical position, the elements to be installed are complemented with the fitting of the invention, whereby secure fixing in the installation support can be established, maintaining the normal position of the elements installed.

Based on the foregoing, the proposed fitting has features making it very advantageous for mounting electrical elements or the like with a rectangular prismatic body in installation supports such as ducts or the like, the use of this fitting being preferred for said application.

### Description of the Drawings

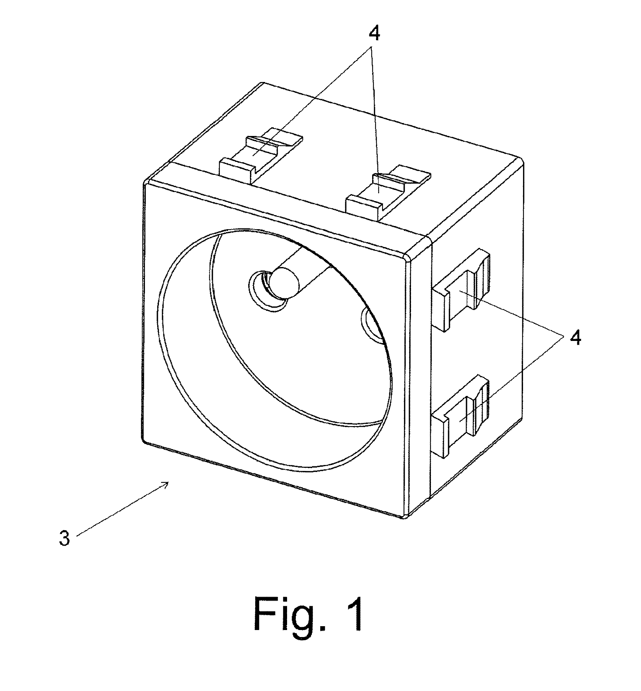

Figure 1 shows a perspective view of the electrical element in the form of a socket with a square prismatic body, having elastic formations on four sides for retaining engagement when mounting the installation.
Figure 2 shows a perspective view of mounting the installation of the element of the preceding figure in a horizontal support.
Figure 3 shows a perspective view of mounting the installation of the same element of Figure 1 in a vertical support.
Figure 4 shows an exploded perspective view of the arrangement for mounting a data transmission connector with a rectangular prismatic body directly installed in a duct-type horizontal support.
Figure 5 shows an exploded perspective view of the arrangement for mounting a connector with a rectangular prismatic body directly installed in a rack-type horizontal support.
Figure 6 shows an exploded perspective view of the arrangement for mounting a connector such as that of Figure 4 in a duct-type vertical support using the fitting of the invention for maintaining the normal position of the connector in the mounted placement.
Figure 7 shows an exploded perspective view of the arrangement for mounting a connector such as that of Figure 5 in a rack-type vertical support using the fitting of the invention.

### Detailed Description of the Invention

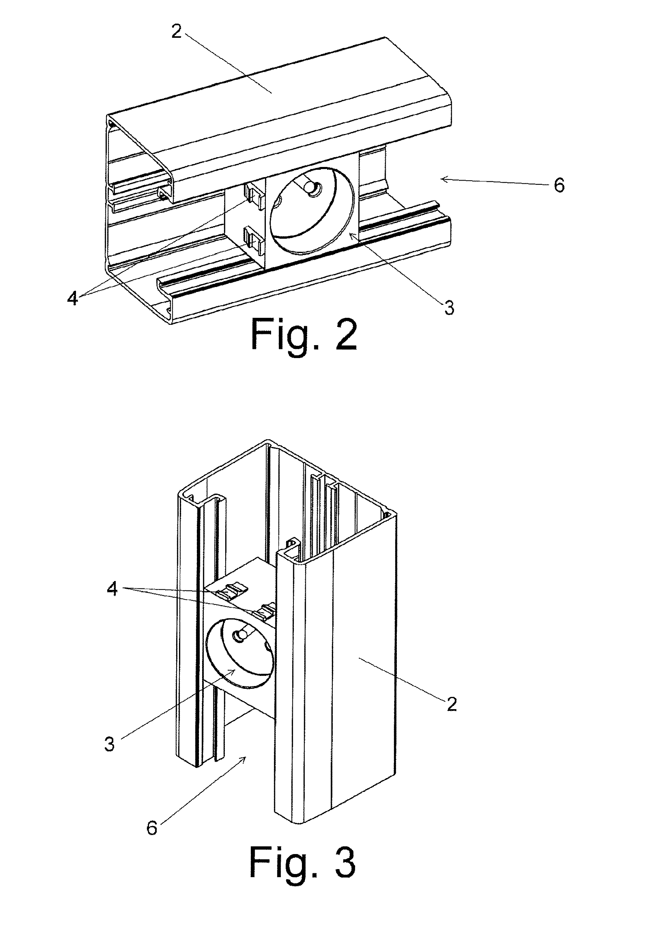

The object of the invention relates to a fitting intended for enabling the installation of electrical elements or the like (1) with a rectangular prismatic body in horizontal or vertical supports (2) (such as ducts or other similar supports for the installation of electrical elements or the like), as well as electrical elements or the like (3) with a square prismatic body having engaging tabs (4) on the four sides, whereby establishing retention thereof in the installation supports (2) using the tabs (4) on some sides or the tabs (4) on other sides, depending on whether the installation supports (2) are horizontal or vertical, for maintaining the normal position of said electrical elements or the like (3) in the installation, as seen in Figures 2 and 3.

The fitting object of the invention comprises a frame (5) the outer transverse width of which corresponds with that of the front groove (6) of the installation supports (2) of the electrical elements or the like (1) of application with a rectangular prismatic body, whereas said frame (5) internally has an opening (7) having a shape corresponding with the contour of the mentioned rectangular prismatic body of the electrical elements or the like (1) of application.

In the outer part of the sides corresponding with the larger sides of the inner opening (7), said frame (5) furthermore has engaging formations (8) for securing this frame (5) in the mounting of application.

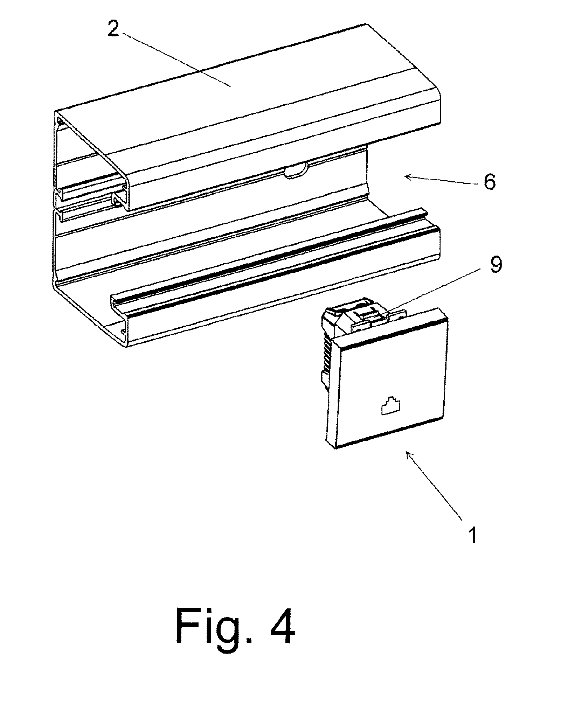

Therefore, when the electrical elements or the like (1) with a rectangular prismatic body must be installed in supports (2), such as ducts or the like, the front groove (6) of which is in a horizontal position, for example, which allows the coupling therein of electrical elements or the like (1) in the normal position thereof with retention by means of engaging tabs (9) provided on the wider sides of the rectangular prismatic body thereof, said electrical elements or the like (1) are directly installed, being secured by themselves in the mentioned installation supports (2), as shown in Figure 4.

However, when the mentioned electrical elements or the like (1) with a rectangular prismatic body must be installed in supports (2) located in a position perpendicular to the preceding position, which would be a vertical position in the indicated example, in the normal placement position of said electrical elements or the like (1) the width of the rectangular prismatic body thereof does not correspond with that of the front groove (6) of the installation supports (2), such that the installation cannot be directly mounted by maintaining the normal placement position of the mentioned electrical elements or the like (1), which must be placed in a position turned 90° with respect to the normal placement position in order to be directly mounted on the vertical installation supports (2).

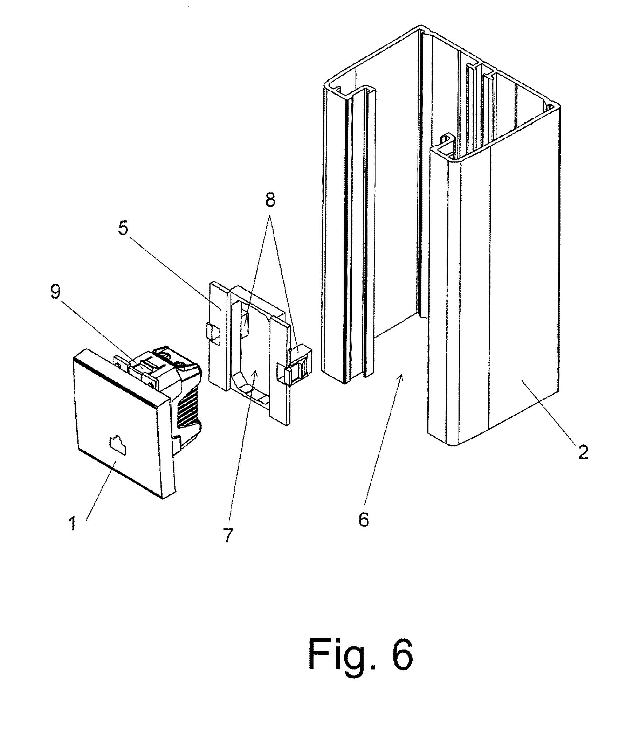

The frame (5) constituting the fitting of the invention solves that problem since by incorporating it on the rectangular prismatic body of the electrical elements or the like (1), the assembly has a transverse width equivalent to that of the front groove (6) of the vertical installation supports (2), coupling for mounting on said vertical installation supports (2) being able to be established by means of engaging the edges of the front groove (6) of the supports with the formations (8) that the frame (5) has on the sides, as inferred from Figure 6.

During coupling on the rectangular prismatic body of the electrical elements or the like (1), the frame (5) is secured by its part being retained by means of the tabs (9) that the actual rectangular prismatic body of the mentioned electrical elements or the like (1) has on its wider sides.

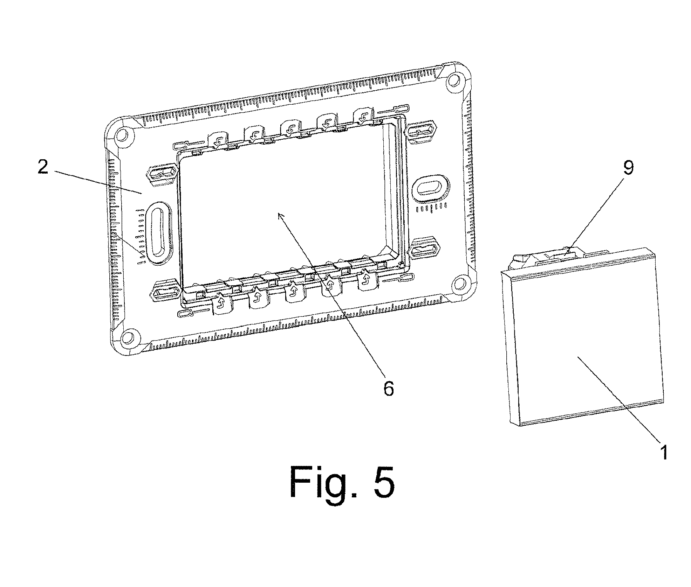

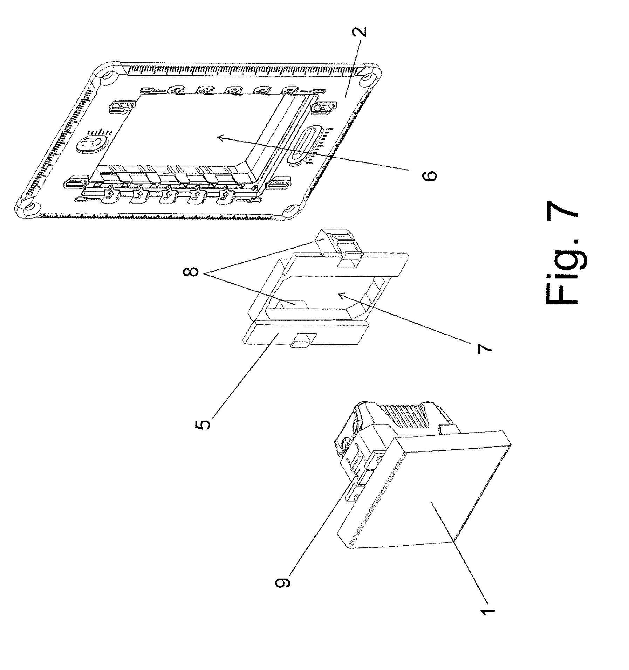

The electrical elements or the like (1) with a rectangular prismatic body can therefore be installed both in horizontal supports (2) (Figures 4 and 5) and in vertical supports (2) (Figures 6 and 7), being secured by themselves in one case, with their own tabs (9), and being secured in another case by means of the frame (5) object of the invention, the normal placement position of said fittings or the like (1) when mounting the installation being able to be maintained in both cases.

## Claims

1. A fitting for mounting electrical elements or the like with a rectangular prismatic body in horizontal and vertical supports to maintain the normal mounting position of the electrical elements or the like (1) with a rectangular prismatic body when mounted on installation supports (2), such as ducts, racks or the like, located in a horizontal position or in a vertical position, **characterized in that** it comprises a frame (5) with an outer transverse width corresponding with the width of the front groove (6) of the installation supports (2), said frame (5) internally having an opening (7) in which the rectangular prismatic body of the electrical elements or the like (1) of application can be fitted, whereas said frame (5) has in the outer part of its transverse width on both sides engaging formations (8); the electrical elements or the like (1) being able to be secured in the frame (5) by means of engaging tabs (9) that the rectangular prismatic body of said electrical elements or the like (1) has on its wider sides for securing the mounting in the installation support (2) by means of the frame (5) when the installation support (2) is in a position in which the width of the rectangular prismatic body of the electrical elements or the like (1) does not correspond, in the normal position thereof, with the width of the front groove (6) of the installation support (2) in which said electrical elements or the like (1) with a rectangular prismatic body can be directly mounted in the normal position thereof when the installation support (2) is in a position perpendicular to the preceding position.

2. The fitting for mounting electrical elements or the like with a rectangular prismatic body in horizontal and vertical supports according to claim 1, **characterized in that** the inner opening (7) of the frame (5) has, in one of its directions, a dimension equivalent to the larger transverse width of the rectangular prismatic body of the electrical elements or the like (1), whereas the inner opening (7) of the frame (5) has, in the other direction, a dimension equal to or greater than the smaller transverse width of the rectangular prismatic body of the electrical elements or the like (1).
